# EUROPÄISCHE PATENTSCHRIFT

(11) **EP 0 965 260 B1**
(45) Veröffentlichungstag und Bekanntmachung des Hinweises auf die Patenterteilung: **11.09.2002**
(21) Anmeldenummer: 99110698.0
(22) Anmeldetag: 02.06.1999
(51) Int. Cl.: A01D 43/10

(54) **Aufbereiter für Kreiselmäher**
Conditioner for rotary mower
Conditionneur pour faucheuse rotative

(30) Priorität: 18.06.1998 DE 19826976
(43) Veröffentlichungstag der Anmeldung: 22.12.1999
(73) Patentinhaber: NIEMEYER Landmaschinen GmbH, D-48477 Hörstel-Riesenbeck (DE)
(72) Erfinder: Tebbenhoff, Hermann, 48496 Hopsten (DE)

(56) Entgegenhaltungen:
- EP-A- 0 064 115
- EP-A- 0 100 628
- EP-A- 0 772 967
- DE-A- 3 446 321
- DE-A- 19 632 868
- DE-U- 29 607 248
- GB-A- 2 020 155
- GB-A- 2 053 645
- NL-C- 1 006 550

## Beschreibung

Die Erfindung betrifft einen Aufbereiter für Kreiselmäher nach dem Oberbegriff des Anspruchs 1.

Aufbereiter nehmen gemähtes Grünfutter in einem Arbeitsgang mit dem Mähvorgang auf und bearbeiten es mit rotierenden Werkzeugen. Dadurch wird das Grünfutter angeknickt und angequetscht, wodurch der Anwelkprozeß beschleunigt wird. Aus der DE 296 07 248 U1 ist beispielsweise ein Aufbereiter zum Anbau an einen Kreiselmäher bekannt, der als Knickzetter ausgebildet ist. Die Bearbeitungswerkzeuge von Knickzettern können als feststehende Schlagzinken oder auch als bewegliche Schlegelzinken ausgebildet sein, die sich auf einer angetriebenen rotierenden Welle befinden, die damit insgesamt einen Rotationskörper bilden.

Das gemähte Grünfutter wird als Grünfutterfluß von den rotierenden Arbeitswerkzeugen des Aufbereiters erfaßt und über diese hinweggeführt. Die Bearbeitungsintensität kann beeinflußt werden, indem der Durchflußwiderstand durch den Aufbereiter veränderbar ist.

Dieses geschieht dadurch, indem parallel und im Abstand zum Rotationskörper und damit zu den Bearbeitungswerkzeugen, eine Prallschiene angeordnet ist, die den freien Durchflußquerschnitt für den Grünfutterfluß bestimmt. Der Durchflußquerschnitt ist definiert durch die Breite des Rotationskörpers und durch die Spaltweite zwischen der Prallschiene und den Bearbeitungswerkzeugen als Rotationskörper. Die Spaltweite zwischen der Prallschiene und den Bearbeitungswerkzeugen kann verändert und damit den Grünfutterverhältnissen angepaßt werden.

Die Veränderung der Spaltweite kann dadurch erfolgen, indem die Prallschiene, welche um eine Drehachse in den Seitenwänden des Aufbereiters gelagert ist, mittels eines Verstellhebels um diese Achse verschwenkt wird.

Aufgrund der in der Praxis anzutreffenden Verschiedenartigkeit der Grünfutterverhältnisse, beispielsweise sortenbedingt, liefert die Verstellmöglichkeit der Spaltbreite nicht in jedem Einsatzfall zufriedenstellende Ergebnisse hinsichtlich der Aufbereitung des Grünfutters.

Bei der bekannten Ausführung des Verstellmechanismusses ist es nachteilig, daß lediglich die Spaltweite zwischen den Bearbeitungswerkzeugen und der Prallschiene in überwiegend radialer Richtung veränderbar ist.

Insbesondere bei geringen Grünfutterbeständen kann der Grünfutterfluß im laufenden Bearbeitungsprozeß des Aufbereiters unterbrochen werden. Ursache dafür ist, daß die inneren Bindungskräfte des Grünfutterflusses überwunden werden durch die mit der Beschleunigung des Grünfutterflusses einhergehenden Zentrifugalkräfte. Dadurch wird das Grünfutter radial nach außen geschleudert und nicht über die Bearbeitungswerkzeuge hinweggeführt, was dazu führt, daß das Grünfutter wieder zurückfällt, und sich vor dem Rotationskörper ansammelt. Dieses führt dann zu unregelmäßigem Durchfluß des Grünfutters durch den Aufbereiter, so daß die Mahd nicht gleichmäßig, sondern als unregelmäßiges Haufwerk abgelegt wird, welches den Anwelk- und Trocknungsprozeß nachteilig beeinflußt.

Aufgabe der Erfindung ist es, einen verbesserten Aufbereiter für Grünfutter mit einem Verstellmechanismus zu schaffen, der es ermöglicht, die Prozeßparameter des Aufbereiters den Eigenschaften des zu bearbeitenden Grünfutterflusses zur Erzielung optimaler Arbeitsergebnisse anpassen zu können.

Gelöst wird die Aufgabe mit den im kennzeichnenden Teil des Anspruchs 1 genannten Merkmalen. Hinsichtlich weiterer wesentlicher Ausgestaltungen der Erfindung wird auf die Ansprüche 2 bis 8 verwiesen.

Ein Aufbereiter nach der Erfindung besitzt eine verstellbare Prallschiene, die so ausgestaltet ist, daß diese sowohl eine Schiebe- als auch eine Drehbewegung ausführen kann. Dadurch kann zum einen die tangentiale Ausrichtung der Prallschiene, und zum anderen der radiale Abstand der Prallschiene in Bezug auf die Rotationsachse der Rotorwalze unabhängig voneinander verändert werden.

Dieses hat zur Folge, daß sowohl der Austrittsspalt als auch der Einzugsspalt zwischen Rotorwalze und Prallschiene variabel einstellbar ist. Dabei ist es außerdem möglich, die Weite des Einzugs- und Austrittsspaltes unabhängig voneinander variieren zu können. Damit kann gleichzeitig der tangentiale Anstellwinkel der Prallschiene zur Rotorwalze ebenfalls variiert werden, wodurch der Querschnitt des Führungskanals zwischen der Begrenzungswand der Prallschiene und dem Umfang der Rotorwalze ebenfalls variierbar ist. Mit einem Arretiermechanismus wird die Prallschiene in ihrer jeweiligen Lage arretiert.

Der Verstellmechanismus der Prallschiene ist so konzipiert, daß die Prallschiene zwei Drehachsen besitzt, zum einen an der Eintrittsseite der Prallschiene und zum anderen an der Austrittsseite der Prallschiene. Dadurch daß die Prallschiene an der Eintrittsseite zusätzlich in einem Langloch geführt ist, ist es möglich, die Prallschiene vorwiegend in vertikaler Richtung bei gleichzeitiger Drehung um die vordere Achse verschieben und drehen zu können. Die Austrittsseite der Prallschiene verfügt ebenfalls über eine drehbare Achse, die gleichfalls Dreh- und Verschiebebewegungen um diese Achse ermöglicht. Somit kann die Prallschiene innerhalb der Begrenzungen des Verstellmechanismusses gleichzeitig Dreh- und Verschiebebewegungen erfahren.

Insbesondere schafft dieses den Vorteil, daß die Einzugsspaltweite des Einzugsquerschnitts des Aufbereiters der Massenstromdichte des Grünfutterflusses angepaßt werden kann.

Zusätzlich beinhaltet diese Ausgestaltung des Verstellmechanismusses der Prallschiene den Vorteil, daß je nach Art und Eigenschaft des Grünfutters der nachfolgende Durchflußquerschnitt des Führungskanals verändert werden kann und dadurch die Bearbeitungsintensität des Grünfutters besonders wirkungsvoll und variabel eingestellt werden kann.

Weitere Merkmale und Vorteile der Erfindung ergeben sich aus der nachfolgenden Beschreibung und den Zeichnungen, in denen ein Ausführungsbeispiel eines Verstellmechanismusses der Prallschiene eines Aufbereiters gemäß der Erfindung schematisch, angenähert maßstäblich dargestellt ist. Weitere Merkmale und Vorteile der Erfindung ergeben sich aus der nachfolgenden Beschreibung und den Zeichnungen.

Es zeigen:
- Fig. 1 -: Ein Kreiselmäher mit Aufbereiter in Draufsicht auf die Arbeitsebene.
- Fig. 2 -: Ansicht in Richtung "X" gemäß Fig.1.
- Fig. 3 -: Vergrößerte Darstellung der Einzelheit "Y" in Fig.2.
- Fig. 4 -: Schnitt B-B nach Schnittverlauf in Fig.3
- Fig. 5 -: Vergrößerte Darstellung der Einzelheit "Z" in Fig.2.
- Fig. 6 -: Schnitt C-C gemäß Fig. 5Fig. 7 -
- Schnitt D-D gemäß Fig. 2.
- Fig. 8 -: Schnitt A-A, gemäß Fig. 1 mit Ausrichtung der Prallschiene etwa in Mittelstellung
- Fig. 9 -: Schnitt A-A, nach Schnittverlauf in Fig. 1 mit Ausrichtung der Prallschiene etwa in Min-Min-Stellung
- Fig. 10 -: Schnitt A-A, nach Schnittverlauf in Fig. 1 mit Ausrichtung der Schlagleiste etwa in Min-Max-Stellung
- Fig. 11 -: Schnitt A-A, nach Schnittverlauf in Fig. 1 mit Ausrichtung der Schlagleiste etwa in Max-Max-Stellung
- Fig. 12 -: Schnitt A-A, nach Schnittverlauf in Fig. 1 mit Ausrichtung der Schlagleiste etwa in Max-Min-Stellung

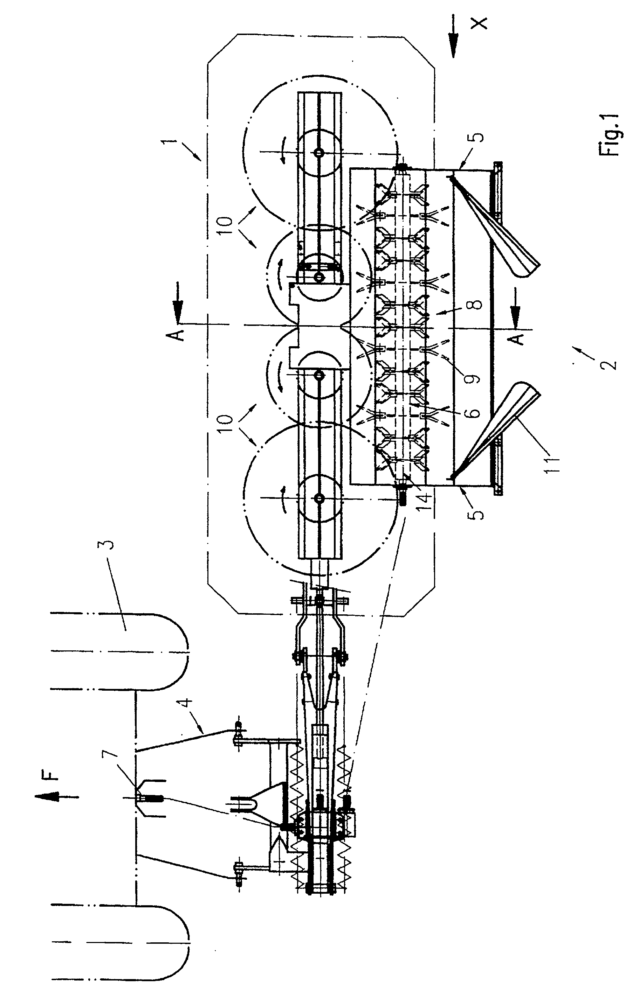

**Fig. 1** zeigt einen Kreiselmäher (1) mit Aufbereiter (2) in einer Draufsicht auf die Arbeitsebene in Fahrrichtung (F), angebaut an das Heckdreipunktgestänge (4) eines Traktors (3). Kreiselmäher (1) und Aufbereiter (2) werden angetrieben von der Zapfwelle (7) eines Traktors (3). Die Rotorwelle (6) mit ihrer Rotationsachse (14) ist in den Seitenwänden des Aufbereitergehäuses (5) gelagert und sie ist in Umfangs- und Längsrichtung mit starren V-förmigen Schlagzinken (9) bestückt. Der Aufbereiter (2) bildet mit dem Kreiselmäher (1) eine Einheit. Das Grünfutter wird von den Mähkreiseln (10) gemäht und dem Aufbereiter (2) zur Aufnahme durch die Rotorwalze (8) zugeführt. Die hinteren Leitbleche (11) schaffen die Möglichkeit, die Breite der abgelegten Mahd variieren zu können.

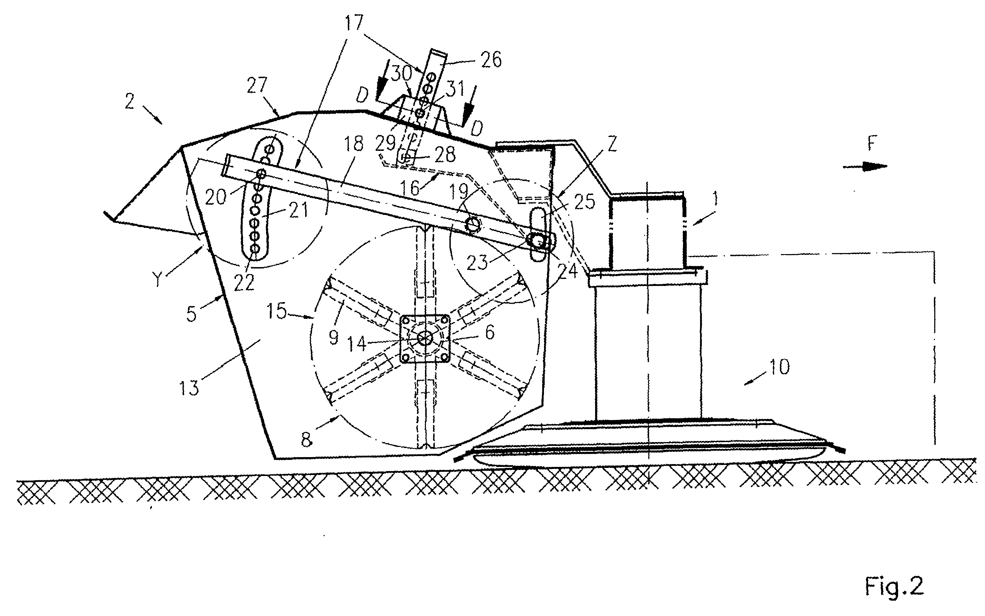

**Fig. 2** zeigt eine Ansicht in Richtung "X" quer zur Fahrtrichtung (F) nach Fig.1. Die Rotorwalze (8) mit ihren Schlagzinken (9) wird von einem Aufbereitergehäuse (5) abgedeckt. Die Rotorwelle (6) ist in den Seitenwand (13) des Aufbereitergehäuse (5) dreh- und antreibbar gelagert. Die äußeren Enden der Zinken bilden auf ihrer Umlaufbahn um die Rotationsachse (14) der Rotorwalze (8), als geometrischer Ort aller sie verbindenden Punkte, Flugkreise (15), welche durch axial und parallel zur Rotationsachse (14) verlaufende Mantellinien verbunden, die Hüllfläche eines zylindrischen Rotationskörpers ergeben, welche als Hüllfläche der Rotorwalze (8) definiert ist.

Oberhalb der Rotorwalze (8) befindet sich eine Prallschiene (16) welche gleichzeitig als Führungs- und Prallwand für den Grünfutterfluß ausgebildet ist. Die Prallschiene (16) befindet sich parallel in Abstand zur Rotationsachse (14) und ist mit einem Verstellmechanismus (17) ausgestattet, der es ermöglicht, den radialen Abstand der Prallschiene (16) von der Rotationsachse (14) zu verändern.

Weiterhin ermöglicht die Ausgestaltung des Verstellmechanismusses (17) die Veränderung der Ausrichtung der Prallschiene (16) in tangentialer Richtung bezogen auf die Rotationsachse (14).

Der Verstellmechanismus (17) befindet sich beidseitig der Seitenwände (13) außerhalb des Aufbereitergehäuses (5), wobei dieser Verstellmechanismus (17) mit der innerhalb des Aufbereitergehäuses (5) befindlichen Prallschiene (16) zur Verstellung in ihrer radialen und tangentialen Ausrichtung in Wirkverbindung steht.

Der Verstellmechanismus (17) besteht aus einem Verstellhebel (18), der in seinem Drehwinkel begrenzt um einen Lagerzapfen (19) verstellbar und damit schwenkbar gelagert ist. Der Lagerzapfen (19) ist an der Seitenwand (13) des Aufbereitergehäuses (5) befestigt und stützt den Verstellhebel (18) sowohl in seiner arretierten Lage als auch während seiner Verstellbewegung ab.

Im arretierten Zustand sind die Verstellhebel (18) festgestellt mit einem federbelasteten Schnappriegelbolzen (20), welcher fest mit dem Verstellhebel (18) verbunden ist und welcher in eine der Bohrungen (22) eines Segmentbleches (21) eingreift.

Am kürzeren Ende der Verstellhebel (18) befindet sich je ein Langloch (23), in denen ein Zapfen (24), welche mit der Prallschiene (16) verbunden sind, geführt werden. Die Achsen der Zapfen (24) bilden eine Schwenkachse (41), um die die Prallschiene (16) in ihrer Ausrichtung verschwenkt werden kann.

Gleichzeitig durchdringen die mit der Prallschiene (16) verbundenen Zapfen (24) die Seitenwände (13) des Aufbereitergehäuses (5) in jeweils einem Langloch (25).

Desweiteren ist die Prallschiene (16) an zwei Schiebehebeln (26), welche die obere Abdeckwand (27) des Aufbereiters (2) in einer Durchführungsöffnung (30) durchqueren, abgehängt. Die Schiebehebel (26) sind dabei in je einem Gelenkpunkt (28) mit der Prallschiene (16) an den Enden ihrer Längserstreckung gelenkig verbunden. Die Verbindung der Gelenkpunkte (28) der beiden Schiebehebel (26) bilden ebenfalls eine Schwenkachse (41') der Prallschiene (16). Außerhalb des Aufbereitergehäuses (5) sind die Schiebehebel (26) in Führungstaschen (29), welche mit einer Durchführungsöffnung (30) ausgestattet sind, mit Steckbolzen (31) abgesteckt.

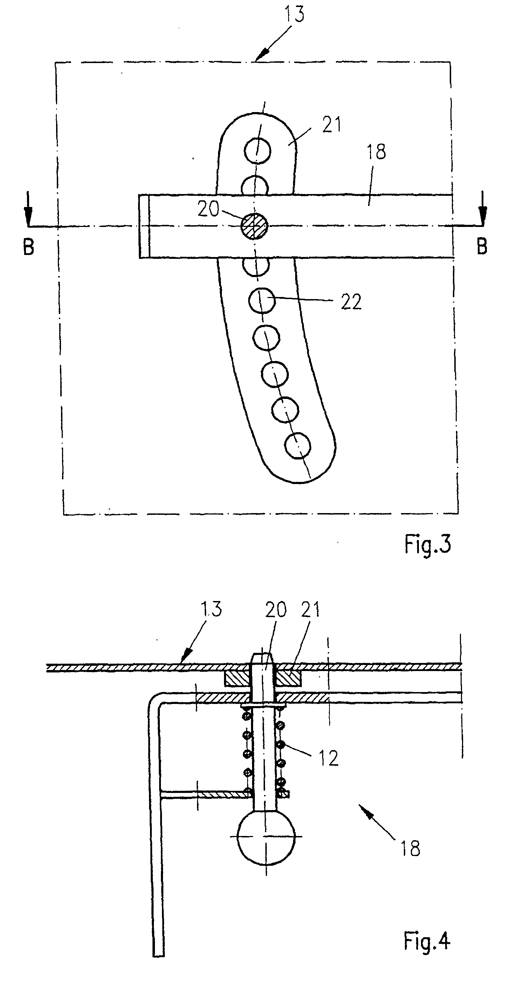

**Fig. 3** zeigt die Einzelheit "Y" in Fig. 2 und damit den Verriegelungsmechanismus des Verstellhebels (18) in vergrößerter Darstellung.

**Fig. 4** zeigt den Schnitt B-B in Fig. 3 als Beispiel einer Ausführung eines Verriegelungsmechanismusses (18) mit dem Schnappriegelbolzen (20), welcher mit einer Druckfeder (12) unter Vorspannung steht.

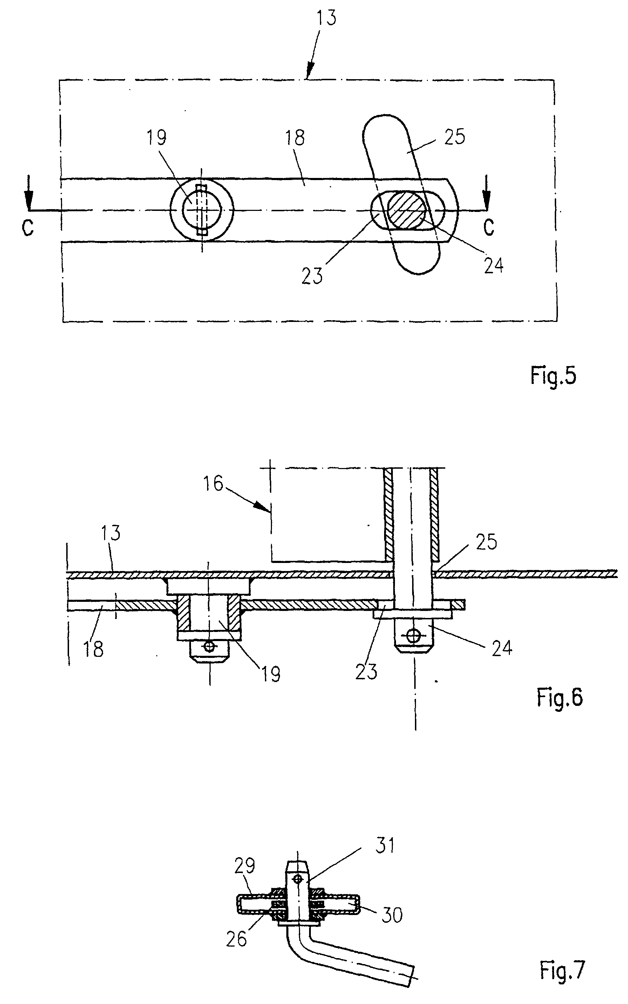

**Fig. 5** zeigt die Einzelheit "Z" in Fig. 2 und damit den Führungsmechanismus des Verstellhebels (18) für die Prallschiene (16) in vergrößerter Darstellung.

**Fig. 6** zeigt den Schnitt C-C in Fig. 5 als Beispiel einer Ausführung durch den Führungsmechanismus der Prallschiene (16).

**Fig. 7** zeigt den Schnitt D-D in Fig. 2 als Beispiel einer Ausführung der Arretierung der Schiebehebel (26).

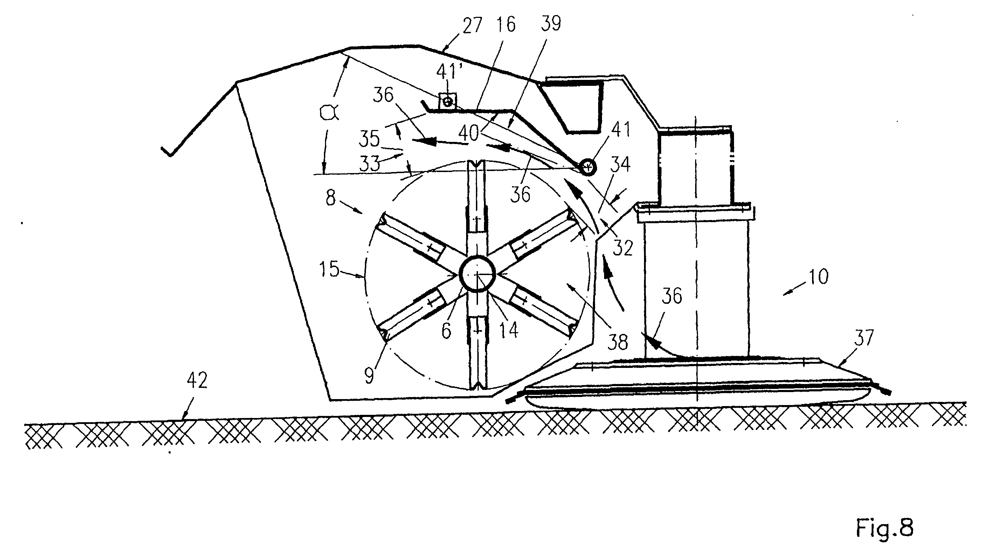

**Fig. 8** zeigt den Schnitt A-A in Fig. 1 mit der Prallschiene (16) in Mittelstellung des Einstellbereiches. Die Ausrichtung und Anordnung der Prallschiene (16) bestimmt den Durchflußwiderstand und damit die Bearbeitungsintensität für den Aufbereitungsvorgang des Grünfutters. Die Ausrichtung der Prallschiene (16) ist gekennzeichnet durch den Winkel (α), wobei dieser Winkel (α) definiert ist durch die Lage zweier Ebenen zueinander, zum einen durch die Ebene, welche durch die Schwenkachsen (41,41') definiert ist, und zum anderen durch eine Ebene parallel zur Arbeitsebene (42). Die Anordnung und Ausrichtung der Prallschiene (16) ist gekennzeichnet durch den jeweiligen Radius und damit durch den Abstand der Schwenkachse (41,41') zur Rotationsachse (14).

Anordnung und Ausrichtung der Prallschiene (16) bestimmen die Größe des Einzugsquerschnitts (32) mit seiner Einzugsspaltweite und die Größe des Austrittsquerschnitt (33) mit seiner Austrittsspaltweite (35).

Der Grünfutterfluß (36) wird von den Schlagzinken (9) der Rotorwalze (8) von den Mähscheiben (37) der Mähkreisel (10) aufgenommen und dann im weiteren Verlauf seiner Flußbewegung durch den Einzugsquerschnitt (32) mit seiner Einzugsspaltweite (34) hindurchgefördert. Das Grünfutter des Grünfutterflusses erfährt somit gleichzeitig eine Tangential- und eine Radialbeschleunigung als Zentifugalbeschleunigung.

Die Zentrifugalbeschleunigung ist die Ursache dafür, daß das Grünfutter durch diese beschleunigten Bewegungen auf seiner Bewegungsbahn um die Rotationsachse (14) nicht nur tangential sondern auch radial und somit nach außen von der Rotationsachse (14) wegbewegt wird. Die Prallschiene (16) begrenzt die radiale Bewegungsrichtung in Bezug auf die Rotationsachse (14) und drückt das Grünfutter gegen die Schlagzinken (9) bzw. in die Zwischenräume (38) zwischen die Schlagzinken (9) der Rotorwalze (8). Die tangentiale Ausrichtung der Prallschiene (16) in Bezug auf die Rotorwalze (8) nimmt ebenfalls Einfluß auf den Durchflußwiderstand und damit auf die Einwirkdauer der Schlagzinken (9) auf das Grünfutter des Grünfutterflusses (36).

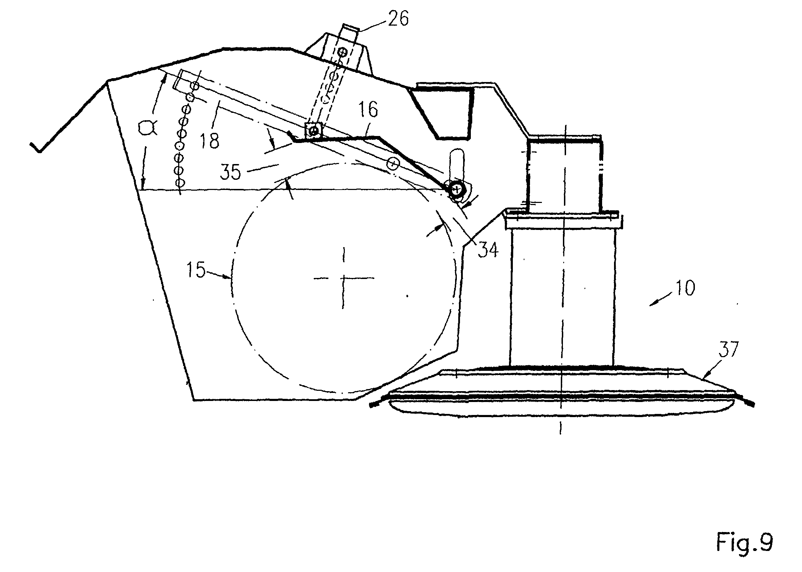

Fig. 9 zeigt den Schnitt A-A in Fig. 1 mit der Prallschiene (16) in Minimalstellung des Einstellbereiches. Die Prallschiene (16) ist durch den Verstellmechanismus (17) gegenüber der Rotorwalze (8) so positioniert und gegenüber dem Aufbereitergehäuse (5) so arretiert, daß Einzugs- (34) und Austrittsspaltweite (35) minimal sind.

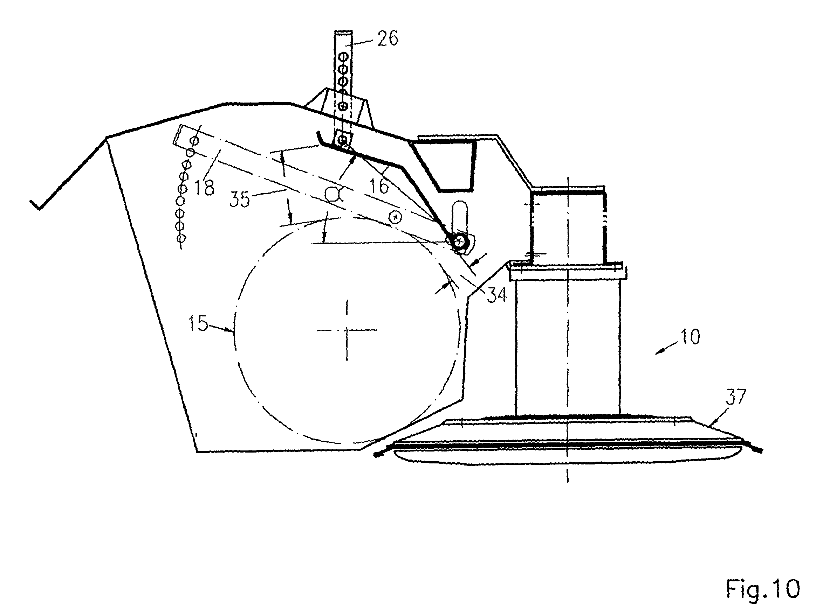

**Fig. 10** zeigt den Schnitt A-A in Fig. 1 mit der Prallschiene (16) in Min-Max-Stellung des Einstellbereiches. Die Prallschiene (16) ist durch den Verstellmechanismus (17) gegenüber der Rotorwalze (8) so positioniert und gegenüber dem Aufbereitergehäuse (5) so arretiert, daß die Einzugsspaltweite (34) minimal und die Austrittsspaltweite (35) maximal ist.

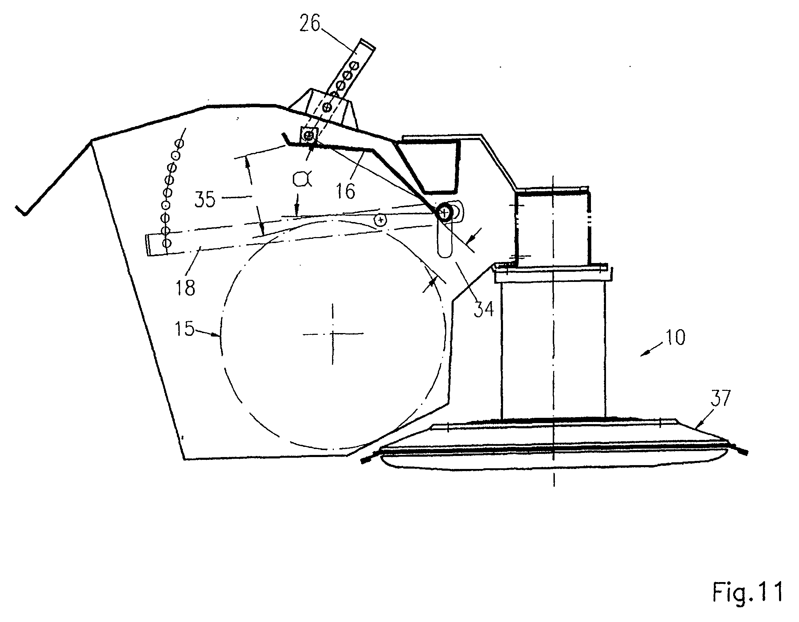

**Fig. 11** zeigt den Schnitt A-A in Fig. 1 mit der Prallschiene (16) in Max-Max-Stellung des Einstellbereiches. Die Prallschiene (16) ist durch den Verstellmechanismus (17) gegenüber der Rotorwalze (8) so positioniert und gegenüber dem Aufbereitergehäuse (5) so arretiert, daß Einzugs- (34) und Austrittsspaltweite (35) maximal sind.

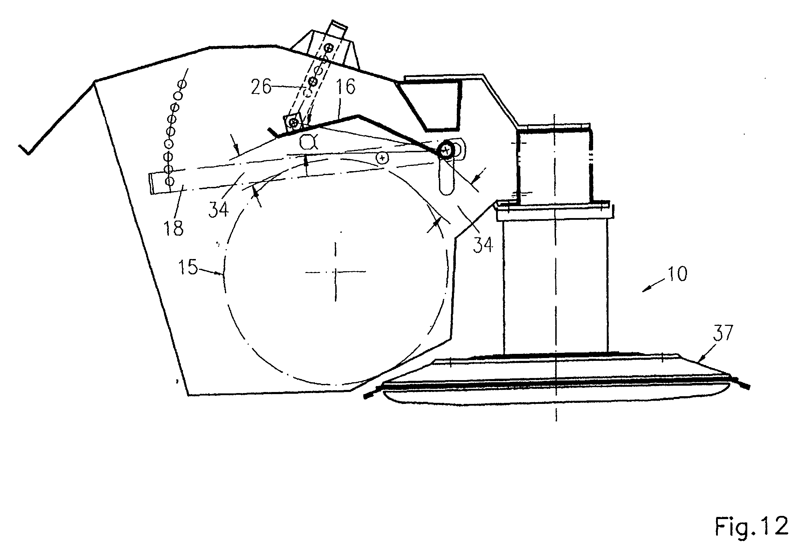

**Fig. 12** zeigt den Schnitt A-A in Fig. 1 mit der Prallschiene (16) Max-Min-Stellung des Einstellbereiches. Die Prallschiene (16) ist durch den Verstellmechanismus (17) gegenüber der Rotorwalze (8) so positioniert und gegenüber dem

Aufbereitergehäuse (5) so arretiert, daß die Einzugsspaltweite (35) maximal und die Austrittsspaltweite (34) minimal ist.

Die in den verschiedenen Positionen dargestellte Prallschiene (16) in Fig. 9 bis Fig. 12, begrenzt das Intervall aller Ausrichtungsmöglichkeiten innerhalb der vorgegebenen Verstelimöglichkeiten des Verstellmechanismusses (17).

Mit dem Verstellhebel (18) einerseits und der Schiebehebel (26) andererseits stehen zwei von einander unabhängig einstellbare Stellglieder des Verstellmechanismusses (17) zur Einstellung der Bearbeitungsintensität des Aufbereiters zur Verfügung. Diese Bearbeitungsintensität ist einstellbar durch die veränderbare Ausgestaltung des Führungskanals (39), welcher gebildet wird von der Prallschiene (16) mit ihrer inneren Begrenzungswand (40) und der Hüllfläche der Rotorwalze (8), gebildet aus den Flugkreisen (15) der Enden der Schlagzinken (9) der Rotorwalze (8). Dieser Führungskanal (39) nimmt Einfluß auf die Führung des Grünfutterflusses (36), indem das Grünfutter mehr oder weniger tief in die Zwischenräume (38) der Rotorwalze (8) zwischen die Schlagzinken (9) eindringen kann.

Die veränderbare Ausgestaltung des Führungskanals (39) ist gekennzeichnet durch die Variierbarkeit der Einzugsspaltweite (34), der Austrittsspaltweite (35) und dem Anstellwinkel (α). Dadurch ist es möglich, zum einen den radialen Abstand und zum anderen die tangentiale Ausrichtung der Prallschiene (16) mit dem Anstellwinkel (α) unabhängig voneinander zu variieren.

Ein besonderer Vorteil der Erfindung besteht darin, daß zusätzlich zur Einstellbarkeit der Bearbeitungsintensität die Einzugsspaltweite (34) veränderbar ist, welches insbesondere bei geringen Futterbeständen von Vorteil ist.

Der Verstellmechanismus (17) kann grundsätzlich auch mit fernbedienbaren mittels Hilfsenergie betätigbaren motorischen Stellantrieben, beispielsweise druckfluidbeaufschlagte Hydraulikzylinder, gesteuert werden. Die Lage und Ausrichtung der Prallschiene (16) kann beispielsweise mittels Sensoren abgefragt werden. deren Signale einem Mikroprozessor im Sinne einer Steuerkette oder eines Regelkreises zugeführt werden. Diese Signale können genutzt werden, um auf einem Datenbildschirm der Benutzerstation in der Fahrerkabine den Ist-Zustand und damit Anordnung und Ausrichtung der Prallschiene (16) anzuzeigen, so daß dem Fahrer des Traktors (3) diese als Information sichtbar zur Verfügung steht. Über entsprechende Bedienelemente kann die Anordnung uns Ausrichtung der Prallschiene (16) vom Fahrer des Traktors (3) verändert werden.

Des weiteren besteht die Möglichkeit, das Antriebsdrehmoment an der Rotorwelle (6) sensorisch zu erfassen. Über einen Regelkreis, dessen Regler ebenfalls ein Mikroprozessor sein kann, besteht die Möglichkeit, im Falle der Überlastung des Aufbereiters (2), zur Vermeidung von Verstopfungen den Eintritts- und Austrittsquerschnitt des Führungskanals (39) automatisch zu vergrößern.

Kreiselmäher mit Aufbereiter nach der Erfindung können als angebaute Geräte im Heck- oder Frontanbaubetrieb oder als angehängte Geräte von einem Traktor betrieben werden.

### Bezugszeichenliste

- 1 -: Kreiselmäher
- 2 -: Aufbereiter
- 3 -: Traktor
- 4 -: Heckdreipunktgestänge
- 5 -: Aufbereitergehäuse
- 6 -: Rotorwelle
- 7 -: Zapfwelle
- 8 -: Rotorwalze
- 9 -: Schlagzinken
- 10 -: Mähkreisel
- 11 -: Leitblech
- 12 -: xDruckfeder
- 13 -: Seitenwand
- 14 -: Rotationsachse
- 15 -: Flugkreis
- 16 -: Prallschiene
- 17 -: Verstellmechanismus
- 18 -: Verstellhebel
- 19 -: Lagerzapfen
- 20 -: Schnappriegelbolzen
- 21 -: Segmentblech
- 22 -: Bohrung
- 23 -: Langloch
- 24 -: Zapfen
- 25 -: Langloch
- 26 -: Schiebehebel
- 27 -: obere Abdeckwand
- 28 -: Gelenkpunkt
- 29 -: Führungstaschen
- 30: - Durchführungsöffnung
- 31 -: Steckbolzen
- 32 -: Einzugsquerschnitt
- 33 -: Austrittsquerschnitt
- 34 -: Einzugsspaltweite
- 35 -: Austrittsspaltweite
- 36 -: Grünfutterfluß
- 37 -: Mähscheiben
- 38 -: Zwischenräume
- 39 -: Führungskanal
- 40 -: Begrenzungswand
- 41,41': - Schwenkachse
- 42 -: Arbeitsebene

- α -: Anstellwinkel
- F -: Fahrtrichtung

## Patentansprüche

1. Aufbereiter (2) für Kreiselmäher (1) zum Knicken und Zetten von Grünfutter, wobei der Aufbereiter (2) eine angetriebene Rotorwelle (6) mit auf deren Umfang und Längsrichtung verteilten und angeordneten Bearbeitungswerkzeugen besitzt, wobei diese ausgebildet sind entweder als feststehende oder als bewegliche Schlagzinken (9), wobei die Rotorwelle (6) mit ihren Schlagzinken (9) in ihrer Gesamtheit einen Rotationskörper als Rotorwalze (8) bildet, wobei das Grünfutter als Mahd des Kreiselmähers (1) dem Aufbereiter (2) als Grünfutterfluß (36) zugeführt wird und von den Schlagzinken (9) der Rotorwalze (8) erfaßt, durch einen Führungskanal (39) zur Bearbeitung des Grünfutters hindurchgeführt wird, wobei der Durchlaßquerschnitt des Führungskanals (39) definiert ist durch seine Längserstreckung parallel zur Rotationsachse (14) der Rotorwalze (8), und in radialer Richtung zur Rotationsachse (14) durch die Spaltweite zwischen Prallschiene (16) und Außenkontur der Hüllfläche der Rotorwalze (8), wobei die Prallschiene (16) parallel zur Rotationsachse (14) in den Seitenwänden (13) des Aufbereiters (2) um eine Schwenkachse verschwenk- und damit dreh- und arretierbar gelagert ist, so daß die Spaltweite des Durchlaßquerschnitts des Führungskanals (39) durch Verschwenken des Prallblechs (16) mit einem Verstellhebel (18) veränderbar ist, **dadurch gekennzeichnet, daß** der Verstellmechanismus (17) zur Veränderung des Durchlaßquerschnitts des Führungskanals (39) so ausgebildet ist, daß die Prallschiene (16) relativ zur Rotationsachse (14) der Rotorwalze (8) verdrehund verschiebbar angeordnet ist, so daß die Einzugsspaltweite (34) und die Austrittsspaltweite (35) unabhängig voneinander veränderbar sind.

2. Aufbereiter nach Anspruch 1, **dadurch gekennzeichnet, daß** die Prallschiene (16) als Bestandteil des Verstellmechanismusses (17) über zwei Schwenkachsen (41,41') verfügt, die in ihrer Längserstreckumg etwa parallel zueinander verlaufen, wobei die tangentiale Ausrichtung der Prallschiene (16) in Bezug auf die Rotationsachse (14) der Rotorwalze (8) sowohl von der einen Schwenkachse (41) als auch von der anderen Schwenkachse (41') ausgehend, verändert werden kann.

3. Aufbereiter nach Anspruch 1 und 2, **dadurch gekennzeichnet, daß** beide Schwenkachsen (41,41') der Prallschiene (16) in Bezug auf die Rotationsachse (14) der Rotorwalze (8) unabhängig voneinander, radiale Verschiebungen innerhalb der Grenzen des Verstellmechanismusses (17) ausführen können.

4. Aufbereiter nach Anspruch 1 und 2, **dadurch gekennzeichnet, daß** beide Schwenkachsen (41,41') der Prallschiene (16) in Bezug auf die Rotationsachse (14) der Rotorwalze (8) unabhängig voneinander, tangentiale Verschiebungen innerhalb der Grenzen des Verstellmechanismusses (17) ausführen können.

5. Aufbereiter nach Anspruch 1 und 2, **dadurch gekennzeichnet, daß** beide Schwenkachsen (41,41') der Prallschiene (16) in Bezug auf die Rotationsachse (14) der Rotorwalze (8) unabhängig voneinander, kombiniert radiale und tangentiale Verschiebungen innerhalb der Grenzen des Verstellmechanismusses (17) ausführen können.

6. Aufbereiter nach Anspruch 1 bis 5, **dadurch gekennzeichnet, daß** die Kombination aus radialer und/oder tangentialer Verschiebung der Prallschiene (16) durch eine Verschiebung der Schwenkachsen (41,41') bestehend aus einer Kombination von Führungselementen, wie Verstellhebel (18), Schiebehebel (26) oder Langlochführungen besteht.

7. Aufbereiter nach Anspruch 1 bis 6, **dadurch gekennzeichnet, daß** der Verstellmechanismus (17) über zwei voneinander unabhängig betätigbare Stelleinrichtungen verfügt, wobei die eine Stelleinrichtung, als Verstellhebel (18) mit der ersten Schwenkachse (41) und die zweite Stelleinrichtung mit der zweiten Schwenkachse (41') der Prallschiene (16) gelenkig gekoppelt ist.

8. Aufbereiter nach Anspruch 1 bis 7, **dadurch gekennzeichnet, daß** die Bedien- und Führungselemente als Stellteile des Verstellmechanismusses (17), ausgebildet sind als Drehhebel um eine feststehende Achse gelagert, und/oder ausgebildet sind als Schiebehebel (26) als Zug- oder Druckstrebe, oder ausgebildet sind als eine Kombination aus Dreh- und Verschiebehebeln.

9. Aufbereiter nach Anspruch 1 bis 8, **dadurch gekennzeichnet, daß** der Verstellmechanismus (17) in seiner jeweils eingestellten Lage arretierbar ist.

10. Aufbereiter nach Anspruch 1 bis 9, **dadurch gekennzeichnet, daß** der Verstellmechanismus (17) fernbedienbar durch motorisch angetriebene Stellantriebe betätigbar ist.

11. Aufbereiter nach Anspruch 1 bis 10, **dadurch gekennzeichnet, daß** der Verstellmechanismus (17) sensorisch überwacht und mikroprozessorgesteuert fernbedienbar steuerbar ist.

12. Aufbereiter nach Anspruch 11, **dadurch gekennzeichnet, daß** der Verstellmechanismus (17) sensorisch überwacht und durch eine oder mehrere Soll-Wertvorgaben fernbedienbar gesteuert und geregelt werden kann.

## Claims

1. Processor (2) for rotary mower (1) for kinking and tedding of green forage, processor (2) being equipped with a driven rotor shaft (6) fitted with processing tools distributed and arranged on its circumference and in longitudinal direction, these tools being designed either as stationary or as moving impact tines (9), whereby the rotor shaft (6) with its impact tines (9), in its entirety, forms a rotational body in the form of a rotor cylinder (8), the green forage being supplied to the processor (2) as a green forage flow (36) as crop mowed by the rotary mower (1), taken up by the impact tines (9) of the rotor cylinder (8), and fed through a guide channel (39) for further processing of the green forage, the throughfeed cross section of the guide channel (39) being defined by its longitudinal extension in parallel to the rotational axis (14) of the rotor cylinder (8), and in radial direction to the rotational axis (14) through the gap width between impact rail (16) and the outer contour of the enveloping surface of the rotary cylinder (8), the impact rail (16) can be swivelled, parallel to the rotational axis (14), in the side walls (13) of the processor (2) around a swivel axis, thereby running in bearings and being able to turn and be arrested, so that the gap width of the throughfeed cross section of the guide channel (39) can be changed by swivelling the impact plate (16) using an adjustment lever (18), **characterised in that** the adjustment mechanism (17) intended to change the throughfeed cross section of the guide channel (39) is designed such that the impact rail (16) can turn and be slid in relation to the rotational axis (14) of the rotor cylinder (8) and that the infeed gap width (34) and the outfeed gap width (35) can be changed independently of each other.

2. Processor according to claim 1, **characterised in that** the impact rail (16) disposes of, as a component of the adjustment mechanism (17), two swivel axes (41, 41') which, in their longitudinal direction, extend about in parallel to each other, whereby the tangential impact rail (16) can be changed in relation to the rotational axis (14) of the rotor cylinder (8) not only starting from the swivel axis (41), but also from the other swivel axis (41').

3. Processor according to claims 1 and 2, **characterised in that** both swivel axes (41, 41') of the impact rail (16) can radially shift within the limits of the adjustment mechanism (17) in relation to the rotational axis (14) of the rotor cylinder (8) independently of each other.

4. Processor according to claims 1 and 2, **characterised in that** both swivel axes (41, 41') of the impact rail (16) can tangentially shift within the limits of the adjustment mechanism (17) in relation to the rotational axis (14) of the rotor cylinder (8) independently of each other.

5. Processor according to claims 1 and 2, **characterised in that** both swivel axes (41, 41') of the impact rail (16) can both radially and tangentially shift within the limits of the adjustment mechanism (17) in relation to the rotational axis (14) of the rotor cylinder (8) independently of each other.

6. Processor according to claims 1 to 5, **characterised in that** the combination of radial and/or tangential shifting of impact rail (16) is performed by a shifting movement of swivel axes (41, 41'), consisting of a combination of guide elements, such as adjustment lever (18), shifting lever (26) or guide slots.

7. Processor according to claim 1 to 6, **characterised in that** the adjustment mechanism (17) is equipped with two adjustment devices that can be operated independent of each other, whereby one of the adjustment devices, as an adjustment lever (18), is coupled with the first swivel axis (41), and the second adjustment device is coupled to the second swivel axis (41') of the impact rail (16).

8. Processor according to 1 to 7, **characterised in that** the operating and guide elements, as adjustment part of the adjustment mechanism (17), are designed as rotary lever, run in bearings around a stationary axis and/or are designed as a slide lever (26) as a pulling or pressure traverse, or as a combination of rotary and slide levers.

9. Processor according to claim 1 to 8, **characterised in that** the adjustment mechanism (17) can be arrested in the individual position set.

10. Processor according to claim 1 to 9, **characterised in that** the adjustment mechanism (17) can be remote controlled by motorised adjustment drives.

11. Processor according to claim 1 to 10, **characterised in that** the adjustment mechanism (17) is sensor monitored and can be remote controlled by microprocessors.

12. Processor according to claim 11, **characterised in that** the adjustment mechanism (17) is sensor monitored and remote controlled and regulated by one or more default set point values.

## Revendications

1. Préparateur (2) pour faucheuse rotative (1) destinée à plier et à étaler du fourrage vert, ce préparateur (2) comportant un arbre de rotor (6) garni d'outils répartis à sa périphérie et dans la direction longitudinale, ces outils étant réalisés soit sous forme de dents de frappe (9) fixes ou mobiles, l'arbre (6) du rotor avec ses dents de frappe (9) constituant globalement un organe de rotation comme cylindre de rotor (8), le fourrage vert alimentant le préparateur (2) sous la forme d'un flux de fourrage (36) venant de l'andain formé par la faucheuse circulaire (1), pour être pris par les dents (9) du cylindre de rotor (8), être conduit à travers un canal de guidage (39) pour le traitement du fourrage vert, la section de passage du canal de guidage (39) étant définie par son extension longitudinale, parallèlement à l'axe de rotation (14) du cylindre de rotor (8) et dans la direction radiale par rapport à l'axe de rotation (14) par la largeur de l'intervalle entre des rails de butée (16) et le contour extérieur de la surface enveloppe du cylindre de rotor (8), le rail de butée (16) étant monté basculant et ainsi à rotation et de façon à pouvoir être bloqué, parallèlement à l'axe de rotation (14) dans les parois latérales (13) du préparateur (2) autour d'un axe de basculement, de sorte que la largeur de l'intervalle de la section de passage du canal de guidage (39) puisse être modifiée par basculement de la tôle de butée (16) avec un levier de réglage (18), **caractérisé en ce que** pour modifier la section de passage du canal de guidage (39), le mécanisme de réglage (17) est conçu de telle sorte que le rail de butée (16) peut tourner et coulisser par rapport à l'axe de rotation (14) du cylindre de rotor (8), et la largeur de l'intervalle d'entrée (34) et la largeur de l'intervalle de sortie (35) peuvent être modifiées indépendamment l'une de l'autre.

2. Préparateur selon la revendication 1, **caractérisé en ce que** le rail de butée (16) fait partie du mécanisme de réglage (17) et comporte deux axes de basculement (41, 41') dirigés dans leur extension longitudinale sensiblement parallèlement l'un à l'autre, l'alignement tangentiel du rail de butée (16) par rapport à l'axe de rotation (14) du cylindre de rotor (8) pouvant être modifié aussi bien à partir de l'un des axes de basculement (41) que de l'autre axe de basculement (41').

3. Préparateur selon la revendication 1 et 2, **caractérisé en ce que** les deux axes de basculement (41, 41') du rail de butée (16) peuvent effectuer par rapport à l'axe de rotation (14) du cylindre de rotor (8), de manière indépendante, des coulissements radiaux à l'intérieur des limites du mécanisme de réglage (17).

4. Préparateur selon les revendications 1 et 2, **caractérisé en ce que** les deux axes de basculement (41, 41') du rail de butée (16) peuvent effectuer par rapport à l'axe de rotation (14) du cylindre de rotor (8), de manière indépendante, des coulissements tangentiels à l'intérieur des limites fixées par le mécanisme de réglage (17).

5. Préparateur selon les revendications 1 et 2, **caractérisé en ce que** les deux axes de basculement (41, 41') du rail de butée (16) peuvent effectuer indépendamment par rapport à l'axe de rotation (14) du cylindre de rotor (8), des coulissements combinés dans la direction radiale et dans la direction tangentielle à l'intérieur des limites du mécanisme de réglage (17).

6. Préparateur selon l'une quelconque des revendications 1 à 5, **caractérisé en ce que** la combinaison du coulissement du rail de butée (16) dans la direction radiale et/ou tangentielle se fait par coulissement des axes de basculement (41, 41') formés d'une combinaison d'éléments de guidage tels que des leviers de réglage (18), des leviers de coulissement (26) ou des trous oblongs de guidage.

7. Préparateur selon l'une quelconque des revendications 1 à 6, **caractérisé en ce que** le mécanisme de réglage (17) comporte deux installations de réglage actionnées indépendamment l'une de l'autre, l'une des installations de réglage étant couplée comme levier de réglage (18) au premier axe de basculement (41) et la seconde installation de réglage étant couplée de manière articulée au second axe de basculement (41') du rail de butée (16).

8. Préparateur selon l'une quelconque des revendications 1 à 7, **caractérisé en ce que** les éléments de guidage et de manoeuvre sont réalisés comme partie du mécanisme de réglage (17) sous forme de levier tournant autour d'un axe fixe et/ou comme levier coulissant (26) avec une entretoise de poussée ou de traction ou encore sous la forme d'une combinaison de leviers de rotation et de coulissement.

9. Préparateur selon l'une quelconque des revendications 1 à 8, **caractérisé en ce que** le mécanisme de réglage (17) peut se bloquer dans la position choisie.

10. Préparateur selon l'une quelconque des revendications 1 à 9, **caractérisé en ce que** le mécanisme de réglage (17) est télécommandé par un actionneur entraîné par un moteur.

11. Préparateur selon l'une quelconque des revendications 1 à 10, **caractérisé en ce que** le mécanisme de réglage (17) est surveillé par des capteurs et se télécommande par microprocesseur.

12. Préparateur selon la revendication 11, **caractérisé en ce que** le mécanisme de réglage (17) est surveillé par des capteurs et est télécommandé et réglé en fonction d'une ou plusieurs valeurs de consigne.
